(19) Europäisches Patentamt
European Patent Office
Office européen des brevets

(11) EP 0 900 008 B1

(12) EUROPÄISCHE PATENTSCHRIFT

(45) Veröffentlichungstag und Bekanntmachung des Hinweises auf die Patenterteilung:
**03.07.2002 Patentblatt 2002/27**

(51) Int Cl.[7]: **A01N 37/52**, A01N 47/24
// (A01N37/52, 47:02),
(A01N47/24, 47:02)

(21) Anmeldenummer: **97916430.8**

(22) Anmeldetag: **03.04.1997**

(86) Internationale Anmeldenummer:
**PCT/EP97/01668**

(87) Internationale Veröffentlichungsnummer:
**WO 97/40672 (06.11.1997 Gazette 1997/47)**

(54) **FUNGIZIDE MISCHUNGEN**

FUNGICIDAL MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **26.04.1996 DE 19616684**
**30.04.1996 DE 19617233**
**02.09.1996 DE 19635518**

(43) Veröffentlichungstag der Anmeldung:
**10.03.1999 Patentblatt 1999/10**

(73) Patentinhaber: **BASF AKTIENGESELLSCHAFT**
**67056 Ludwigshafen (DE)**

(72) Erfinder:
- **MÜLLER, Ruth**
  **D-67159 Friedelsheim (DE)**
- **BAYER, Herbert**
  **D-68159 Mannheim (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SCHELBERGER, Klaus**
  **D-67161 Gönnheim (DE)**
- **SCHERER, Maria**
  **D-76829 Landau (DE)**
- **LEYENDECKER, Joachim**
  **D-68526 Ladenburg (DE)**
- **MÜLLER, Bernd**
  **D-67227 Frankenthal (DE)**

(56) Entgegenhaltungen:
**EP-A- 0 645 088** **WO-A-95/15083**
**WO-A-95/21153** **WO-A-96/01256**
**WO-A-96/01258** **WO-A-97/06684**
**DE-A- 4 421 041** **DE-A- 19 528 651**

- **PESTICIDE SCIENCE, Bd. 44, Nr. 1, Mai 1995, Seiten 77-79, XP002020496 FRAINE DE P J ET AL: "A NEW SERIES OF BROAD-SPECTRUM BETA-METHOXYACRYLATE FUNGICIDES WITH AN OXIME ETHER SIDE-CHAIN"**
- **RESEARCH DISCLOSURE, Nr. 348, 1.April 1993, Seite 267, COMPL XP000304224 "MIXTURES OF FUNGICIDES AND HERBICIDES"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 900 008 B1

## Beschreibung

Die vorliegende Erfindung betrifft eine fungizide Mischung, welche mindestens eine Verbindung ausgewählt aus der Gruppe bestehend aus

$a_1$) Oximethern der Formel I,

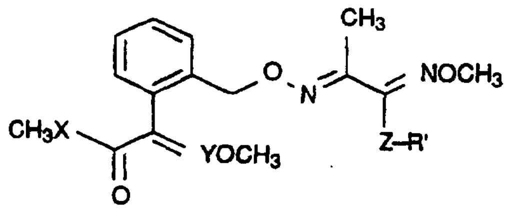

(I)

x Sauerstoff oder Amino (NH);

Y CH oder N;

z Sauerstoff, Schwefel, Amino (NH) oder $C_1$-$C_4$-Alkylamino (N-$C_1$-$C_4$-Alkyl);

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

$a_2$) Carbamaten der Formel II,

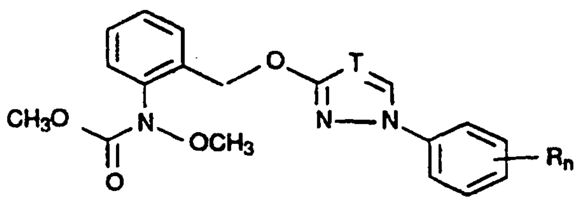

(II)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und

b) ein Phthalimidderivat ausgewählt aus der Gruppe der Verbindungen III und IV

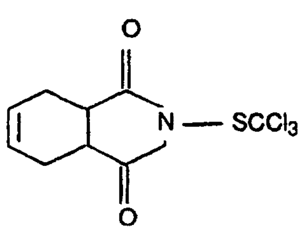

(III)

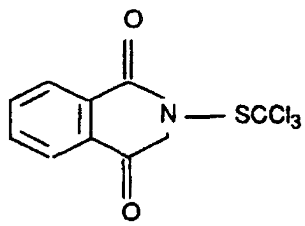

(IV)

in einer synergistisch wirksamen Menge enthält.

Außerdem betrifft die Erfindung Verfahren zur Bekämpfung von Schadpilzen mit Mischungen der Verbindungen I oder II und III bzw. der Verbindungen I oder II und IV und die Verwendung der Verbindungen I, der Verbindungen II und der Verbindungen III und IV zur Herstellung derartiger Mischungen.

Die Verbindungen der Formel I, ihre Herstellung und ihre Wirkung gegen Schadpilze ist aus der Literatur bekannt (WO-A 95/21,153, WO-A 95/21,154, DE-A 195 28 651.0).

Die Verbindungen der Formel II, ihre Herstellung und ihre wirkung gegen Schadpilze sind aus der Literatur bekannt (WO-A 96/01,256 und WO-A 96/01,258).

Ebenfalls bekannt sind die Phthalimidderivate III und IV (US-A 2,553,770; 2,553,771; 2,553,776), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I oder II und der Verbindung III oder der Verbindung IV oder bei Anwendung der Verbindungen I oder II und der Verbindung III bzw. der Verbindung IV nacheinander. Schadpilze besser bekämpfen lassen als mit den Einzelverbindungen.

Die allgemeine Formel I steht insbesondere repräsentativ für Oximether, in denen X Sauerstoff und Y CH bedeutet oder X Amino und Y N bedeutet.

Außerdem werden Verbindungen I bevorzugt, in denen Z für Sauerstoff steht.

Gleichermaßen werden Verbindungen I bevorzugt, in denen R' für Alkyl oder Benzyl steht.

Im Hinblick auf ihre Verwendung in den erfindungsgemäßen synergistischen Mischungen werden insbesondere die in den folgenden Tabellen zusammengestellten Verbindungen I bevorzugt:

Tabelle 1.

Verbindungen der Formel IA, in denen ZR' für eine Verbindung jeweils einer Zeile der Tabelle A entspricht

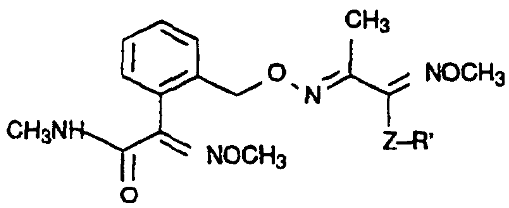

(IA)

Tabelle 2.

Verbindungen der Formel IB, in denen ZR' für eine Verbindung jeweils einer Zeile der Tabelle A entspricht

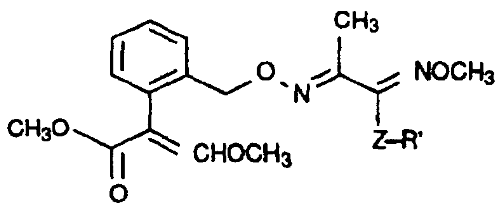

(IB)

Tabelle A:

| Nr. | ZR' |
|---|---|
| I.1 | $O-CH_2CH_2CH_3$ |
| I.2 | $O-CH(CH_3)_2$ |
| I.3 | $O-CH_2CH_2CH_2CH_3$ |
| I.4 | $O-CH(CH_3)CH_2CH_3$ |
| I.5 | $O-CH_2CH(CH_3)_2$ |
| I.6 | $O-C(CH_3)_3$ |
| I.7 | $S-C(CH_3)_3$ |
| I.8 | $O-CH(CH_3)CH_2CH_2CH_3$ |
| I.9 | $O-CH_2C(CH_3)_3$ |
| I.10 | $O-CH_2C(Cl)=CCl_2$ |
| I.11 | $O-CH_2CH=CH-Cl$ (trans) |
| I.12 | $O-CH_2C(CH_3)=CH_2$ |
| I.13 | $O-CH_2$-(cyclopropyl) |
| I.14 | $O-CH_2-C_6H_5$ |
| I.15 | $O-CH_2-[4-F-C_6H_4]$ |
| I.16 | $O-CH_2CH_3$ |
| I.17 | $O-CH(CH_2CH_3)_2$ |

Die Verbindungen der Formel I können in Bezug auf die C=Y-Doppelbindung in der E- oder der Z-Konfiguration (in Bezug auf die Gruppierung Carbonsäurefunktion) vorliegen. Demgemäß können sie in der erfindungsgemäßen Mischung jeweils entweder als reines E- oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen.

Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt ($OCH_3$-Gruppe zu ZR').

Die Formel II repräsentiert insbesondere Carbamate, in denen die Kombination der Substituenten einer Zeile der folgenden Tabelle entspricht:

Tabelle 3:

| Nr. | X | $R_n$ |
|---|---|---|
| II.1 | N | 2-F |
| II.2 | N | 3-F |
| II.3 | N | 4-F |

Tabelle 3: (fortgesetzt)

| Nr. | X | $R_n$ |
|---|---|---|
| II.4 | N | 2-Cl |
| II.5 | N | 3-Cl |
| II.6 | N | 4-Cl |
| II.7 | N | 2-Br |
| II.8 | N | 3-Br |
| II.9 | N | 4-Br |
| II.10 | N | $2\text{-}CH_3$ |
| II.11 | N | $3\text{-}CH_3$ |
| II.12 | N | $4\text{-}CH_3$ |
| II.13 | N | $2\text{-}CH_2CH_3$ |
| II.14 | N | $3\text{-}CH_2CH_3$ |
| II.15 | N | $4\text{-}CH_2CH_3$ |
| II.16 | N | $2\text{-}CH(CH_3)_2$ |
| II.17 | N | $3\text{-}CH(CH_3)_2$ |
| II.18 | N | $4\text{-}CH(CH_3)_2$ |
| II.19 | N | $2\text{-}CF_3$ |
| II.20 | N | $3\text{-}CF_3$ |
| II.21 | N | $4\text{-}CF_3$ |
| II.22 | N | $2,4\text{-}F_2$ |
| II.23 | N | $2,4\text{-}Cl_2$ |
| II.24 | N | $3,4\text{-}Cl_2$ |
| II.25 | N | $2\text{-}Cl, 4\text{-}CH_3$ |
| II.26 | N | $3\text{-}Cl, 4\text{-}CH_3$ |
| II.27 | CH | 2-F |
| II.28 | CH | 3-F |
| II.29 | CH | 4-F |
| II.30 | CH | 2-Cl |
| II.31 | CH | 3-Cl |
| II.32 | CH | 4-Cl |
| II.33 | CH | 2-Br |
| II.34 | CH | 3-Br |
| II.35 | CH | 4-Br |
| II.36 | CH | $2\text{-}CH_3$ |
| II.37 | CH | $3\text{-}CH_3$ |
| II.38 | CH | $4\text{-}CH_3$ |
| II.39 | CH | $2\text{-}CH_2CH_3$ |
| II.40 | CH | $3\text{-}CH_2CH_3$ |
| II.41 | CH | $4\text{-}CH_2CH_3$ |

Tabelle 3: (fortgesetzt)

| Nr. | X | $R_n$ |
|---|---|---|
| II.42 | CH | 2-$CH(CH_3)_2$ |
| II.43 | CH | 3-$CH(CH_3)_2$ |
| II.44 | CH | 4-$CH(CH_3)_2$ |
| II.45 | CH | 2-$CF_3$ |
| II.46 | CH | 3-$CF_3$ |
| II.47 | CH | 4-$CF_3$ |
| II.48 | CH | 2,4-$F_2$ |
| II.49 | CH | 2,4-$Cl_2$ |
| II.50 | CH | 3,4-$Cl_2$ |
| II.51 | CH | 2-Cl, 4-$CH_3$ |
| II.52 | CH | 3-Cl, 4-$CH_3$ |

Besonders bevorzugt werden die Verbindungen II.12, II.23, II.32 und II.38.

Die Verbindungen I und II sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei-der Bereitstellung der Mischungen die reinen Wirkstoffe I und II bzw. III und IV ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und/oder II und III bzw. I und/oder II und IV bzw. die gleichzeitige gemeinsame oder getrennte Verwendung der Verbindungen I und/oder II und III bzw. I und/oder II und IV zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii. Die Verbindungen I und/oder II und III bzw. I und/oder II und IV können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und/oder II und III bzw. I und/oder II und IV werden üblicherweise in einem Gewichtsverhältnis von 1:1 bis 1:100, vorzugsweise 1:1 bis 1:50, insbesondere 1:3 bis 1:30 (I oder II:III bzw. IV) angewendet.

Die Aufwandmengen der erfindungsgemäßen Mischungen liegen im allgemeinen je nach Art des gewünschten Effekts bei 0,02 bis 5 kg/ha, vorzugsweise 0,05 bis 3,5 kg/ha, insbesondere 0,1 bis 3,5 kg/ha.

Die Aufwandmengen liegen dabei üblicherweise für die Verbindungen I und/oder II bei 0,005 bis 0,5 kg/ha, vorzugsweise 0,01 bis 0,5 kg/ha, insbesondere 0,01 bis 0,3 kg/ha.

Die Aufwandmengen für die Verbindungen III bzw. die Verbindungen IV liegen entsprechend bei 0,1 bis 5 kg/ha, vorzugsweise 0,1 bis 3,5 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 5 g/kg verwendet.

Sofern für Pflanzen pathogene Schadpilze zu bekämpfen sind, erfolgt die getrennte oder gemeinsame Applikation der Verbindungen I und/oder II und III bzw. I und/oder II und IV oder der Mischungen aus den Verbindungen I und/oder II und III bzw. I und/oder II und IV durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und/oder II und III bzw. I und/oder II und IV können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und/oder II oder III bzw. I und/oder II oder IV oder der Mischung aus den Verbindungen I und/oder II und III bzw. I und/oder II und IV mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder II oder III bzw. I und/oder II oder IV bzw. der Mischung aus den Verbindungen I und/oder II und III bzw. I und/oder II und IV. Die Wirkstoffe werden dabei in einer Reinheit von 90 % bis 100 %, vorzugsweise 95.% bis 100 % (nach NMR- oder HPLC-Spektrum) eingesetzt.

Die Verbindungen I und/oder II oder III bzw. I und/oder II oder IV bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und/oder II und III bzw. I und/oder II und IV bei getrennter Ausbringung, behandelt. Die Anwendung kann vor oder nach dem Befall durch die Schadpilze erfolgen.

Die fungizide Wirkung der Verbindungen und der Mischungen läßt sich durch folgende Versuche zeigen:

Die Wirkstoffe werden getrennt oder gemeinsam als 10 %-ige Emulsion in einem Gemisch aus 70 Gew.-%

Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte wurden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Der Wirkungsgrad (W) wird nach der Formel von Abbot wie folgt berechnet:

$$W = (1 - \alpha) \cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1 bis 21

Wirksamkeit gegen Botrytis cinerea an Paprika

Paprikasämlinge der Sorte "Neusiedler Ideal Elite" wurden, nachdem sich 4 bis 5 Blätter gut entwickelt hatten, mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am nächsten Tag wurden die behandelten Pflanzen mit einer Sporensuspension von Botrytis cinerea, die 1,7 x $10^6$ Sporen/ml in einer 2%igen wäßrigen Biomalzlösung enthielt, inokuliert. Anschließend wurden die Versuchspflanzen in eine Klimakammer mit 22 bis 24 °C und hoher Luftfeuchtigkeit gestellt. Nach 5 Tagen konnte das Ausmaß des Pilzbefalls auf den Blättern visuell in % ermittelt werden.

Die Ergebnisse sind in der Tabelle 4 wiedergegeben.

Tabelle 4

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (99 % Befall) | 0 |
| 2V | A = Tab. 1 A, Nr. 2 | 50 | 0 |
| | | 25 | 0 |
| | | 12,5 | 0 |
| 3V | B = Tab. 1 A, Nr. 4 | 50 | 0 |
| | | 25 | 0 |
| | | 12,5 | 0 |

Tabelle 4 (fortgesetzt)

| Bsp. | Wirkstoff | Wirkstoffkonzentration in der Spritzbrühe in ppm | Wirkungsgrad in % der unbehandelten Kontrolle |
|---|---|---|---|
| 4V | III = Captan® | 25 | 0 |
| | | 12,5 | 0 |
| 5V | IV = Folpet® | 25 | 0 |
| | | 12,5 | 0 |

Tabelle 5

| Bsp. | Mischung Wirkstoffkonzentration in der Spritzbrühe in ppm | beobachteter Wirkungsgrad | berechneter Wirkungsgrad *) |
|---|---|---|---|
| 6 | 50 A + 25 III | 70 | 0 |
| 7 | 25 A + 12,5 III | 30 | 0 |
| 8 | 25 A + 25 III | 97 | 0 |
| 9 | 12,5 A + 12,5 III | 50 | 0 |
| 10 | 50 A + 25 IV | 90 | 0 |
| 11 | 25 A + 12,5 IV | 20 | 0 |
| 12 | 25 A + 25 IV | 97 | 0 |
| 13 | 12,5 A + 12,5 IV | 20 | 0 |
| 14 | 50 B + 25 III | 80 | 0 |
| 15 | 25 B + 12,5 III | 40 | 0 |
| 16 | 25 B + 25 III | 95 | 0 |
| 17 | 12,5 B + 12,5 III | 30 | 0 |
| 18 | 50 B + 25 IV | 90 | 0 |
| 19 | 25 B + 12,5 IV | 80 | 0 |
| 20 | 25 B + 25 IV | 80 | 0 |
| 21 | 12,5 B + 12,5 IV | 70 | 0 |

*) berechnet nach der Formel von Colby

Beispiele 22 bis 42

Wirksamkeit gegen Botrytis cinerea an Paprikaschoten

Scheiben von grünen Paprikaschoten wurden mit einer wäßrigen Wirkstoffaufbereitung, die mit einer Stammlösung bestehend aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2%igen Biomalzlösung enthielt, inokuliert. Die inokulierten Fruchtscheiben wurden anschließend in feuchten Kammern bei 18 °C für 4 Tage inkubiert. Dann erfolgte visuell die Auswertung des Botrytis-Befalls auf den befallenen Fruchtscheiben.

Tabelle 6

| Bsp. | Wirkstoff | Wirkstoffkonzentration in der Spritzbrühe in ppm | Wirkungsgrad in % der unbehandelten Kontrolle |
|---|---|---|---|
| 22V | Kontrolle (unbehandelt) | (99 % Befall) | 0 |

Tabelle 6 (fortgesetzt)

| Bsp. | Wirkstoff | Wirkstoffkonzentration in der Spritzbrühe in ppm | Wirkungsgrad in % der unbehandelten Kontrolle |
|---|---|---|---|
| 23V | A | 200 | 29 |
| | | 100 | 50 |
| | | 25 | 19 |
| | | 12,5 | 9 |
| 24V | B | 50 | 50 |
| | | 25 | 39 |
| | | 12,5 | 9 |
| 25V | III = Captan | 100 | 19 |
| | | 25 | 9 |
| | | 12,5 | 9 |
| 26V | IV = Folpet | 100 | 29 |
| | | 25 | 9 |
| | | 12,5 | 0 |

Tabelle 7

| Bsp. | Wirkstoffkonzentration in der Spritzbruhe in ppm | beobachteter Wirkungsgrad | berechneter Wirkungsgrad *) |
|---|---|---|---|
| 27 | 200 A + 100 III | 95 | 43 |
| 28 | 25 A + 12,5 III | 60 | 27 |
| 29 | 100 A + 100 III | 90 | 59 |
| 30 | 25 A + 25 III | 50 | 27 |
| 31 | 200 A + 100 IV | 95 | 50 |
| 32 | 25 A + 12,5 IV | 39 | 19 |
| 33 | 25 A + 25 IV | 60 | 27 |
| 34 | 12,5 A + 12,5 IV | 29 | 9 |
| 35 | 50 B + 25 III | 85 | 54 |
| 36 | 25 B + 12,5 III | 70 | 45 |
| 37 | 50 B + 50 III | 97 | 59 |
| 38 | 25 B + 25 III | 80 | 45 |
| 39 | 50 B + 25 IV | 85 | 54 |
| 40 | 25 B + 12,5 IV | 85 | 39 |
| 41 | 25 B + 25 IV | 85 | 45 |
| 42 | 12,5 B + 12,5 IV | 70 | 9 |

*) berechnet nach der Formel von Colby

Aus den Ergebnissen der Beispiele 1 bis 42 geht hervor, daß der beobachtete Wirkungsgrad in allen Mischungsverhältnissen höher ist, als der nach der Colby-Formel vorausberechnete Wirkungsgrad.

Beispiele 43 bis 58

Wirksamkeit gegen Botrytis cinerea an Paprika

Paprikasämlinge der Sorte "Neusiedler Ideal Elite" wurden, nachdem sich 4 bis 5 Blätter gut entwickelt hatten, mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am nächsten Tag wurden die behandelten Pflanzen mit einer Sporensuspension von Botrytis cinerea, die 1,7 x $10^6$ Sporen/ml in einer 2%igen wäßrigen Biomalzlösung enthielt, inokuliert. Anschließend wurden die Versuchspflanzen in einer Klimakammer mit 22 bis 24 °C und hoher Luftfeuchtigkeit gestellt. Nach 5 Tagen konnte das Ausmaß des Pilzbefalls auf den Blättern visuell in % ermittelt werden.

Tabelle 8

| Bsp. | Wirkstoff | Wirkstoffkonzentration in der Spritzbrühe in ppm | Wirkungsgrad in % der unbehandelten Kontrolle |
|---|---|---|---|
| 43V | Kontrolle (unbehandelt) | (99 % Befall) | 0 |
| 44V | C = Verbindung Nr. II.32 | 50 | 80 |
| | | 25 | 80 |
| | | 12,5 | 50 |
| 45V | D = Verbindung Nr. II.38 | 50 | 30 |
| | | 25 | 30 |
| | | 12,5 | 0 |
| 46V | III = Captan® | 25 | 0 |
| 47V | IV = Folpet® | 25 | 0 |
| | | 12,5 | 0 |

Tabelle 9

| Bsp. | Wirkstoffkonzentration in der Spritzbrühe in ppm | beobachteter Wirkungsgrad | berechneter Wirkungsgrad *) |
|---|---|---|---|
| 48 | 50 C + 25 III | 97 | 80 |
| 49 | 25 C + 25 III | 99 | 80 |
| 50 | 50 C + 25 IV | 90 | 80 |
| 51 | 25 C + 25 IV | 97 | 80 |
| 52 | 12,5 C + 12,5 IV | 95 | 50 |
| 53 | 25 D + 25 III | 98 | 29 |
| 54 | 12,5 D + 12,5 III | 97 | 0 |
| 55 | 50 D + 25 IV | 95 | 29 |
| 56 | 25 D + 12,5 IV | 70 | 29 |
| 57 | 25 D + 25 IV | 98 | 29 |
| 58 | 12,5 D + 12,5 IV | 85 | 0 |

*) berechnet nach der Formel von Colby

Beispiele 59 bis 79

Wirksamkeit gegen Botrytis cinerea an Paprikaschoten

Scheiben von grünen Paprikaschoten wurden mit einer wäßrigen Wirkstoffaufbereitung, die mit einer Stammlösung bestehend aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2%igen Biomalzlösung enthielt, inokuliert. Die inokulierten Fruchtscheiben wurden anschließend in feuchten Kammern bei 18 °C für 4 Tage inkubiert, Dann erfolgte visuelle die Auswertung des Botrytis-Befalls auf den befallenen Fruchtscheiben.

Tabelle 10

| Bsp. | Wirkstoff | Wirkstoffkonzentration in der Spritzbrühe in ppm | Wirkungsgrad in % der unbehandelten Kontrolle |
|---|---|---|---|
| 59V | Kontrolle (unbehandelt) | (99 % Befall) (99 % Befall) | 0 0 |
| 60V | C = Verbdg. II.32 aus Tabelle 3 | 100 | 50 |
| | | 25 | 50 |
| 61V | D = Verbdg. II.38 aus Tabelle 3 | 50 | 50 |
| | | 25 | 39 |
| | | 12,5 | 9 |
| 62V | III = Captan® | 200 | 29 |
| | | 100 | 19 |
| | | 50 | 9 |
| | | 25 | 9 |
| | | 12,5 | 9 |
| 63V | IV = Folpet® | 100 | 29 |
| | | 50 | 19 |
| | | 25 | 9 |
| | | 12,5 | 0 |
| Bsp. | Wirkstoffkonzentration in der Spritzbrühe in ppm | beobachteter Wirkungsgrad | berechneter Wirkungsgrad *) |
| 64 | 100 C + 50 III | 95 | 59 |
| 65 | 25 C + 12,5 III | 80 | 54 |
| 66 | 100 C + 100 III | 95 | 59 |
| 67 | 25 C + 25 II | 90 | 54 |
| 68 | 100 C + 50 IV | 90 | 59 |
| 69 | 25 C + 12,5 IV | 80 | 50 |
| 70 | 100 C + 100 IV | 95 | 64 |
| 71 | 25 C + 25 IV | 70 | 54 |
| 72 | 200 D + 100 III | 80 | 43 |
| 73 | 50 D + 25 III | 60 | 18 |
| 74 | 50 D + 50 III | 90 | 27 |
| 75 | 25 D + 25 III | 80 | 18 |
| 76 | 100 D + 50 IV | 80 | 35 |
| 77 | 50 D + 25 IV | 50 | 18 |
| 78 | 100 D + 100 IV | 80 | 43 |
| 79 | 25 D + 25 IV | 50 | 18 |

*) berechnet nach der Formel von Colby

Aus den Ergebnissen der Beispiele geht hervor, daß der beobachtete Wirkungsgrad in allen Mischungsverhältnissen höher ist, als der nach der Colby-Formel vorausberechnete Wirkungsgrad.

**Patentansprüche**

**1.** Fungizide Mischung, enthaltend

a) mindestens eine Verbindung ausgewählt aus der Gruppe bestehend aus

$a_1$) Oximethern der Formel I,

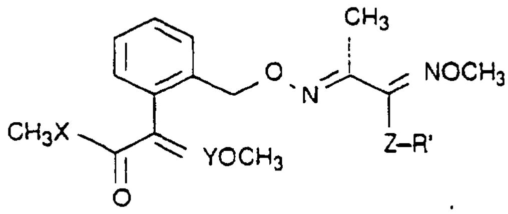

(I)

in der die Substituenten die folgende Bedeutung haben:

x Sauerstoff oder Amino (NH);

Y CH oder N;

Z Sauerstoff, Schwefel, Amino (NH) oder $C_1$-$C_4$-Alkylamino (N-$C_1$-$C_4$-Alkyl) ;

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

$a_2$) Carbamaten der Formel II,

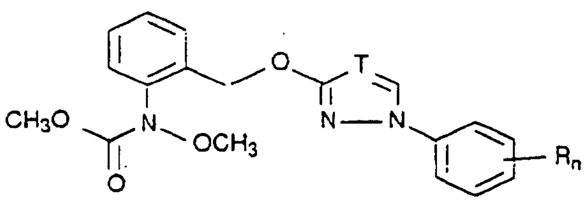

(II)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und

b) ein Phthalimidderivat ausgewählt aus der Gruppe der Verbindungen III und IV

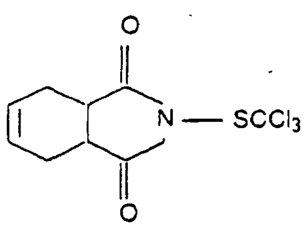

(III)

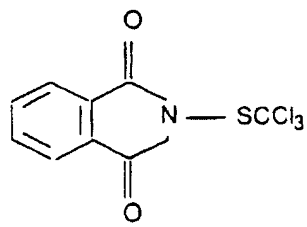

(IV)

in einer synergistisch wirksamen Menge.

2. Fungizide Mischung nach Anspruch 1, enthaltend eine Verbindung der Formel I oder II gemäß Anspruch 1 und das Phthalimidderivat III.

3. Fungizide Mischung nach Anspruch 1, enthaltend eine Verbindung der Formel I oder II gemäß Anspruch 1 und das Phthalimidderivat IV.

4. Fungizide Mischung nach Anspruch 1, **dadurch gekennzeichnet, daß** das Gewichtsverhältnis der Verbindung I oder II zu der Verbindung III oder der Verbindung IV 1:1 bis 1:100 beträgt.

5. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit Verbindungen der Formel I oder II gemäß Anspruch 1 und der Verbindung der Formel III gemäß Anspruch 1 oder der Verbindung der Formel IV gemäß Anspruch 1 in einer synergistisch wirksamen Menge behandelt.

6. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha der Verbindung I oder II gemäß Anspruch 1 behandelt.

7. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 0,1 bis 5 kg/ha der Verbindung III bzw. der Verbindung IV gemäß Anspruch 1 behandelt.

## Claims

1. A fungicidal mixture comprising

a) at least one compound selected from the group consisting of

$a_1$) oxime ethers of the formula I

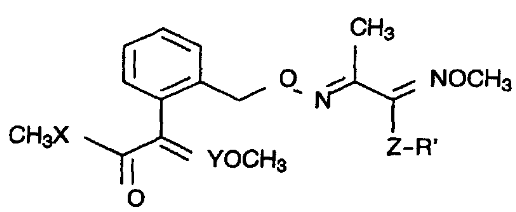

(I)

where the substituents have the following meanings:

x is oxygen or amino (NH);

Y is CH or N;

z is oxygen, sulfur, amino (NH) or $C_1$-$C_4$-alkylamino (N-$C_1$-$C_4$-alkyl);

R' is $C_1$-$C_6$-alkyl, $C_1$-$C_6$-haloalkyl, $C_3$-$C_6$-alkenyl, $C_2$-$C_6$-haloalkenyl, $C_3$-$C_6$-alkynyl, $C_3$-$C_6$-haloalkynyl, $C_3$-$C_6$-cycloalkylmethyl, or is benzyl which can be partially or fully halogenated and/or can have attached to it one to three of the following radicals: cyano, $C_1$-$C_4$-alkyl, $C_1$-$C_4$-haloalkyl, $C_1$-$C_4$-alkoxy, $C_1$-$C_4$-haloalkoxy and $C_1$-$C_4$-alkylthio;

$a_2$) carbamates of the formula II

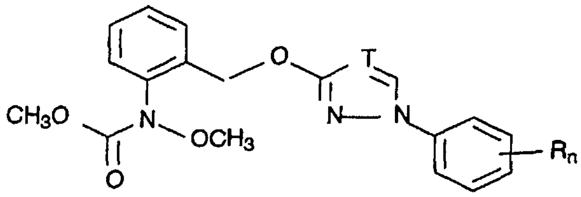

(II)

where T is CH or N, n is 0, 1 or 2 and R is halogen, $C_1$-$C_4$-alkyl or $C_1$-$C_4$-haloalkyl, it being possible for the radicals R to be different if n is 2, and

b) a phthalimide derivative selected from the group of the compounds III and IV

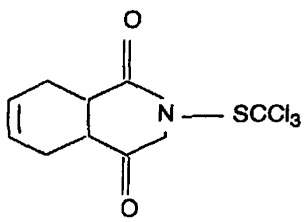

III

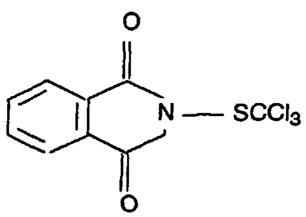

IV

in a synergistically active amount.

**2.** A fungicidal mixture as claimed in claim 1 comprising a compound of the formula I or II as set forth in claim 1 and the phthalimide derivative III.

**3.** A fungicidal mixture as claimed in claim 1 comprising a compound of the formula I or II as set forth in claim 1 and the phthalimide derivative IV.

**4.** A fungicidal mixture as claimed in claim 1 wherein the weight ratio of the compound I or II to the compound III or the compound IV is 1:1 to 1:100.

**5.** A method of controlling harmful fungi, which comprises treating the harmful fungi, their environment, or the plants, seeds, soils, areas, materials or spaces to be kept free from them with compounds of the formula I or II as set forth in claim 1 and the compound of the formula III as set forth in claim 1 or the compound of the formula IV as set forth in claim 1 in a synergistically active amount.

**6.** A method as claimed in claim 5, wherein the harmful fungi, their environment, or the plants, seeds, soils, areas, materials or spaces to be kept free from them are treated with from 0.005 to 0.5 kg/ha of a compound I or II as set forth in claim 1.

**7.** A method as claimed in claim 5, wherein the harmful fungi, their environment, or the plants, seeds, soils, areas, materials or spaces to be kept free from them are treated with from 0.1 to 5 kg/ha of the compound III or the compound IV as set forth in claim 1.

**Revendications**

**1.** Mélange fongicide contenant

a) au moins un composé choisi dans le groupe consistant en

$a_1$) les éthers d'oximes de formule I

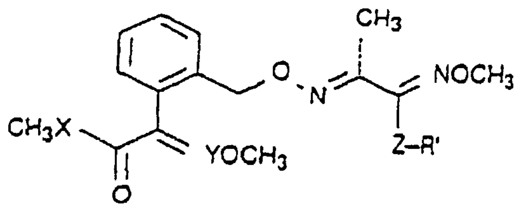

(I)

dans laquelle les symboles ont les significations suivantes :

X : l'oxygène ou un groupe amino (NH) ;

Y : CH ou N ;

Z : l'oxygène, le soufre, un groupe amino (NH) ou alkylamino en Cl-C4 (N-alkyle en C1-C4) ;

R' : un groupe alkyle en C1-C6, halogénoalkyle en C1-C6, alcényle en C3-C6, halogénoalcényle en C2-C6, alcynyle en C3-C6, halogénoalcynyle en C3-C6, (cycloalkyle en C3-C6)méthyle ou benzyle, qui peut être halogéné en totalité ou en partie et/ou peut porter un à trois des substituants suivants : cyano, alkyle en C1-C4, halogénoalkyle en C1-C4, alcoxy en C1-C4, halogénoalcoxy en C1-C4 et alkylthio en C1-C4 ;

$a_2$) les carbamates de formule II

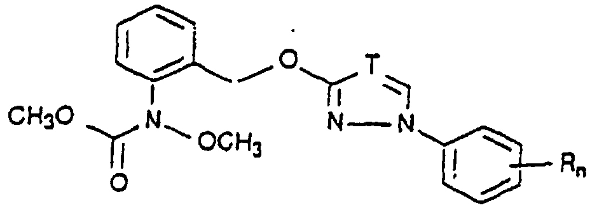

(II)

dans laquelle T représente CH ou N, n est égal à 0, 1 ou 2 et R représente un halogène, un groupe alkyle en C1-C4 ou halogénoalkyle en C1-C4, les substituants R pouvant être différents lorsque n est égal à 2, et

a) un dérivé du phtalimide choisis dans le groupe des composés III et IV

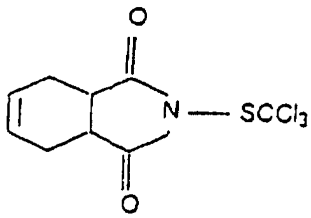

(III)

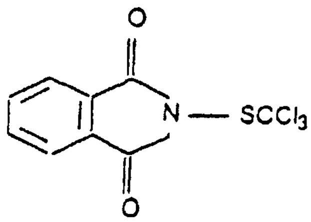

(IV)

en quantité synergétique efficace.

2. Mélange fongicide selon la revendication 1, contenant un composé de formule I ou II selon la revendication 1 et le dérivé du phtalimide III.

3. Mélange fongicide selon la revendication 1, contenant un composé de formule I ou II selon la revendication 1 et le dérivé du phtalimide IV.

4. Mélange fongicide selon la revendication 1, **caractérisé par le fait que** les proportions relatives en poids entre le composé I ou II et le composé III ou le composé IV vont de 1 : 1 à 1 : 100.

5. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles, par des composés de formule I ou II selon la revendication 1 et le composé de formule III selon la revendication 1 ou le composé de formule IV selon la revendication 1 en quantité synergétique efficace.

6. Procédé selon la revendication 5, **caractérisé par le fait que** l'on traite les mycètes nuisibles, leur habitat ou les végétaux, semences, sols, aires, matériaux ou locaux qu'on veut protéger contre les mycètes nuisibles, par 0,005 à 0,5 kg/ha du composé I ou II, selon la revendication 1.

7. Procédé selon la revendication 5, **caractérisé par le fait que** l'on traite les mycètes nuisibles leur habitat ou les végétaux, semences, sols, aires, matériaux ou locaux qu'on veut protéger contre les mycètes nuisibles par 0,1 à 5 kg/ha du composé III ou du composé IV.